# EUROPEAN PATENT APPLICATION

(11) **EP 2 538 350 A1**
(43) Date of publication of application: **26.12.2012**
(21) Application number: 12170161.9
(22) Date of filing: 31.05.2012
(51) Int. Cl.: G06F 17/30

(54) **User interface and content integration**

(30) Priority: 24.06.2011 US 201161500898 P; 09.04.2012 US 201213442560
(71) Applicant: Sony Corporation, Tokyo 108-0075 (JP); Sony Network Entertainment International LLC, Los Angeles, CA 90045 (US)
(72) Inventor: Arriola, George, San Francisco, CA 94107 (US); Schwesig, Carsten, San Francisco, CA 94110 (US); Williams, George, San Francisco, CA 94606 (US)
(74) Representative: DeVile, Jonathan Mark

(57) **Abstract**

In one embodiment, a method of controlling a user interface can include: displaying a plurality of objects on a display screen, where each of the plurality of objects represents media content; accepting, by a computing device, a signal indicating user selection of an object from the plurality of objects; determining personal relevancy data associated with the selected object, where the personal relevancy data is determined by using a recommendation engine and at least in part by accessing content from a social network; playing the media content represented by the selected object, where the media content is displayed in a background on the display screen; and displaying the personal relevancy data in a foreground on the display screen.

## Description

The present invention relates to apparatus and methods for controlling a user interface in which each of a plurality of objects represents media content.

### Background

In order for a user to interact with a computing/display device to access media content, a user interface (UI) may be used. The user may navigate the UI in order to locate and play, or otherwise access, requested media content, such as a movie. Menu structures can include hierarchical structures whereby one set of menu items is found after selecting an appropriate menu item in the hierarchy. However, information from other sources, such as via social networks, information about what the user's friends like, etc., may need to be accessed from a different UI and/or device.

### Summary

Various aspects and features of the present invention are defined in the appended claims.

In one embodiment, a method of controlling a user interface can include: displaying a plurality of objects on a display screen, where each of the plurality of objects represents media content; accepting, by a computing device, a signal indicating user selection of an object from the plurality of objects; determining personal relevancy data associated with the selected object, where the personal relevancy data is determined by using a recommendation engine and at least in part by accessing content from a social network; playing the media content represented by the selected object, where the media content is displayed in a background on the display screen; and displaying the personal relevancy data in a foreground on the display screen.

A further understanding of the nature and the advantages of particular embodiments disclosed herein may be realized by reference of the remaining portions of the specification and the attached drawings.

### Brief Description of the Drawings

Embodiments of the invention will now be described with reference to the accompanying drawings, throughout which like parts are referred to by like references, and in which:
Figure 1 depicts an example user interface (UI) system application.
Figure 2 depicts an example UI entry screen.
Figure 3 depicts an example UI menu view.
Figure 4 depicts an example UI with related content footer.
Figure 5 depicts an example UI with a compact footer.
Figure 6 depicts an example UI with related content overlay.
Figure 7 depicts an example UI with a grid view of content collections.
Figure 8 is a flow diagram of an example method of controlling a UI.

### Detailed Description of Embodiments

In particular embodiments, an application and corresponding user interface can combine consumed content and web-based information that is related to specific user interests. The user interface can include information in a foreground of the interface that is related to media content currently being presented in the background of the interface. Additional radio buttons or other selectable objects may also be used to access web-based and/or social media information about the media content that is being displayed to the user.

Particular embodiments can include meta data or "personal relevancy data" about media content that is being accessed, and the meta data can be displayed over the accessed media content on a display screen. For example, information from a social network and/or via a recommendations engine may be used to form the personal relevancy data. The personal relevancy data can include information about the particular media content that is playing, information about the user accessing the media content (e.g., activity logging), as well as information that is otherwise determined as relevant to the user of the media content, and may include meta data and related content.

Particular embodiments can include a user interface (UI) with rich media derived at least in part from a social networking system. For example, the personal relevancy or related meta data can be derived from Facebook, Google, etc., and may be in the form of rich media. Thus, comments from a user on social media, as well as television programs that the user watches or shares, can be used to determine personal relevancy meta data. The personal relevancy data can be displayed in the foreground of a display, and may be related to, and may overlay what is playing on the display screen in the background. Further, a "pivot" can be employed whereby information is intelligently mapped to the presently accessed media content via a recommendation engine.

Thus in particular embodiments, meta data may be intelligently selected by design and/or by a recommendation system, and bubbled up for display via the UI. The meta data may be pulled in to a foreground over media content or other display information that is currently being displayed in the background. When a UI application is launched, selection options of relevant content or personal relevancy data (e.g., live television, applications, web sites, etc.) can be presented to the user. The personal relevancy data can be determined through one or more of activity logging, use of a recommendation engine, and/or by obtaining social network content. A user may also easily navigate the personal relevancy data while other media content is playing on the display or UI.

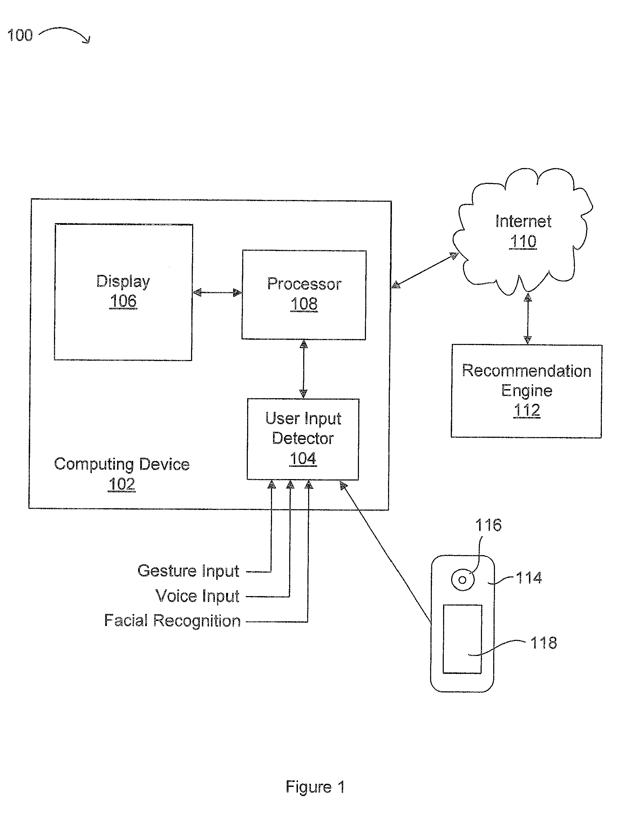

Figure 1 depicts an example UI system 100 application. In this example, computing device 102 can include user input detector 104, display 106, and processor 108. Computing device 102 may represent any suitable device, such as a computer, a laptop, a smartphone, a tablet computer, a television, or any device that can access and play media content. Various types of user control of the UI can be accommodated. For example, user input detector 104 can include a mouse interface, a remote control interface, a voice input detection interface, a touch detection (e.g., capacitive touch detection) interface, and a gesture input interface (e.g., a camera, facial recognition engine, etc.).

User input detector 104 can thus detect a variety of user inputs for controlling a UI on computing device 102. For example, one or more of gesture input, voice input, facial recognition and/or movements, as well as remote control inputs, can be utilized to control the UI. The gesture input can control key features with simple natural gestures, such as hand placements and/or movements. Voice input commands may reduce the need for text-based input, and may support quick and efficient navigation by use of voice commands. Facial recognition may be user to recognize, track, and adapt to multiple users, such as in game applications. In addition, when multiple users are detected, personal relevancy data can be provided for each of the detected users. For example, the behavior of multiple users can be tracked by using a background process while in a television application.

Remote control 114 can include directional buttons 116 and trackpad 118, and may be used for highlight-driven UI control. Directional buttons 116 can be used to move a highlight across available UI options or objects, and to select the highlighted object. Trackpad 118 can be used to perform clicking and single touch gestures that can be mapped to scrolling or frequently used functionality (e.g., volume controls, context switching, etc.). Thus, remote control 114 can be used to provide various types of inputs, such as highlight-driven control for object selection. Processor 108 can include any general purpose processor, such as a central processing unit (CPU), a microcontroller, a graphics processor, or the like. Display 106 can be any suitable type of display screen, such as a television display and/or a touch sensitive or capacitive touch based display. Computing device 102 can connect to Internet 110, or a private network (e.g., a virtual private network (VPN)), and may access recommendation engine 112. Recommendation engine 112 may alternatively be implemented on computing device 102, or may be otherwise accessible to provide recommended personal relevancy data based on various inputs (e.g., social network information).

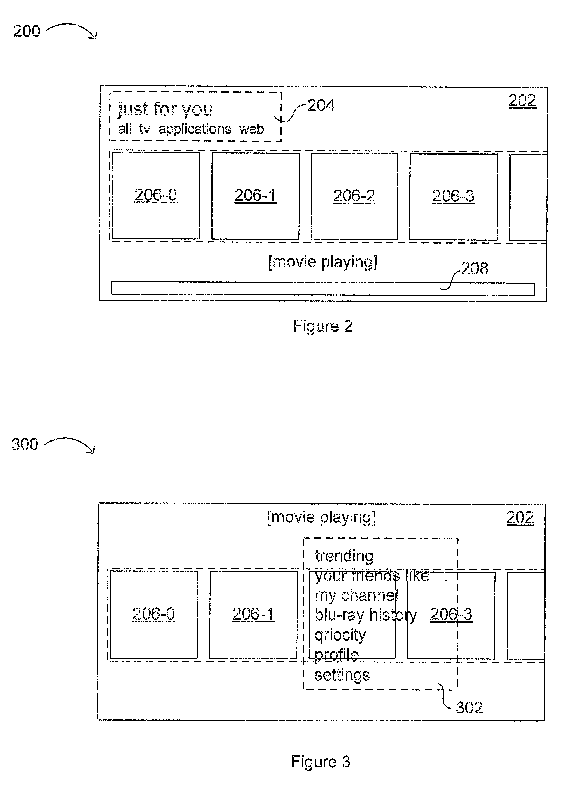

Figure 2 depicts an example UI entry screen 200. Entry screen 200 can include media content (e.g., a movie) playing in the background on display screen 202. The media content that is playing may be previously selected media content, or default content (e.g., animated background art, a default movie, etc.). Menu 204 can provide access to menu items, access to related content or personal relevancy data, and may provide for filtering options for objects 206. Objects 206 (e.g., 206-0, 206-1, 206-2, 206-3, etc.) can represent media content that may be selected for access or playback. Objects 206 may be navigated by a highlight-driven interface, and a default highlight can be on a predetermined object (e.g., 206-0) when entry screen 200 is launched. Also, compact footer 208 may contain meta data for the currently playing media content, and may also provide one or more links to related content.

When a user presses (or otherwise selects) a designated button (e.g., on remote control 114), an application for the UI may launch with entry screen 200 being displayed. As shown, the current media content (e.g., a movie) may be playing or otherwise displayed in the background of display screen 202. Objects 206 can be displayed in the foreground of display screen 202, and other personal relevancy data may be displayed as an overlay or on the same foreground level as objects 206. For example, the personal relevancy data may include textual information as an overlay on a graphical representation of the media content and/or objects.

Objects 206 can provide relatively quick access to relevant content across a variety of available content types. Thus, objects 206 may represent media content from a variety of media content types in a mixed content format. Menu 204 can also be used to filter objects 206 by choosing television, applications, web, etc., and in response objects 206 can be reconfigured to display objects that represent media content for the selected content type. Hints that indicate access to options for the current context can also be included in compact footer 208 and/or in menu 204. In any event, entry screen 200 can provide an entry point to the exemplary UI application. In this way, relevant content can be emphasized, and menu links as well as links to related content may be provided while currently playing content is displayed in the background of display screen 202.

Objects 206 can be navigated by using a highlight-driven interface, and an enter button may be used to select a presently highlighted object. As discussed above, gesture inputs, voice inputs, etc., can also be used for navigation of the UI. For example, a wave gesture or hand positioning to the left or right can move the highlight from one object 206 to another adjacent object 206, corresponding to the hand positioning. A grab gesture can be used to select the currently highlighted object. Of course, other types or alternative definitions of gestures can also be accommodated. Further, voice inputs via speech recognition, alone or in combination with gesture inputs, can be used to navigate objects 206, as well as other UI menu items.

Figure 3 depicts an example UI menu view 300. Navigation menu 302 may be displayed as an overlay in front of objects 206. For example, navigation menu 302 can include trending items, items that a user's friends like, a personal channel, a profile, settings, history, and so on. Thus, navigation menu 302 may provide links to personal relevancy data for the user. In this way, a user may control which types or portions of the available personal relevancy data that are displayed. A user may also customize the types of personal relevancy data that are provided. For example, certain users may not want to utilize possible personal relevancy data that is determined based on trending items, and this can be removed from or otherwise deselected from navigation menu 302.

The menu view can be used for more directed browsing, as well as for providing links to store items, such as for a store associated with a hardware or application provider. Also, currently playing media content can be displayed in the background of display screen 202 while navigation menu 302 is displayed in the foreground, e.g., as an overlay on objects 206. UI menu view 300 may be accessed by selecting a menu button, or by accessing a hint button as discussed above with reference to entry screen 200.

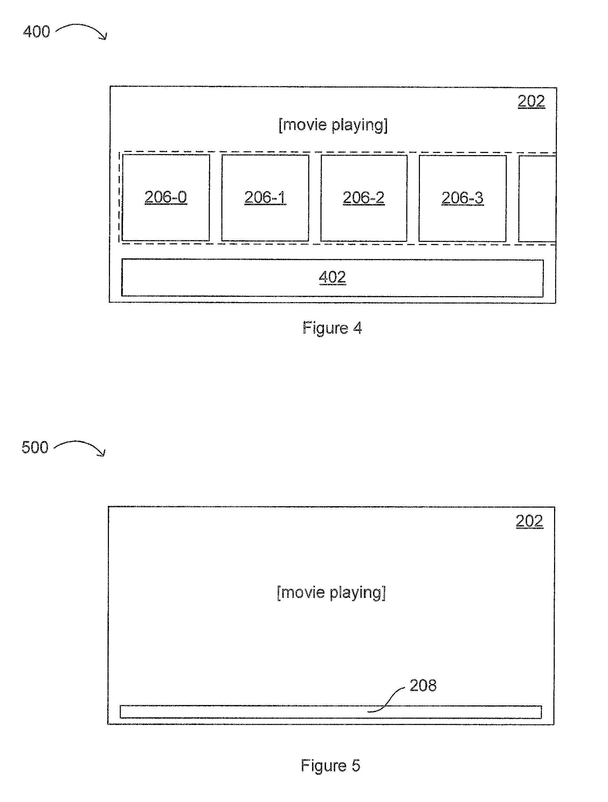

Figure 4 depicts an example UI with related content footer (400). In this example, related content footer 402 can be included. A designated button can be pressed from the entry screen 200 in order to expand the footer (e.g., from a compact footer 208) to show links to extended meta data, related content, and/or personal relevancy data. For example, related content footer 402 can be displayed as an overlay on full screen television content that is currently playing.

Related content footer 402 can display related content, links, and menu items, and may also be accessed from entry screen 200. The footer can expand and highlight various personal relevancy data. As an example for television media content playing in the background on display screen 202, related content footer 402 can include rich meta data and options, related television content, cast options, track identification, and/or Twitter real-time conversation. The user may navigate icons corresponding to the meta data and options within related content footer 402 in order to access detail associated with the selected icon. Also, related content footer 402 can disappear after a predetermined timeout, unless the user interacts with the footer.

Some media content types, such as Blu-ray disc (BD) history items, may not be suitable for playback. However, for accessing these items, a detail view can be used to present relevant meta data and links to related content. In addition, currently playing content can also be displayed as an insert or in the background of display screen 202, along with the detail view.

Figure 5 depicts an example UI with a compact footer (500). When an object 206 is selected from UI entry screen 200, compact footer 208 can be shown for a predetermined time, and then may go away to provide a full-screen view of the media content on display screen 202. For example, when the selected object 206 represents television content, compact footer 208 may be shown prior to handover to a television application. Also, if the designated button is pressed to expand the footer prior to this timeout, the footer can be expanded into the related content footer 402.

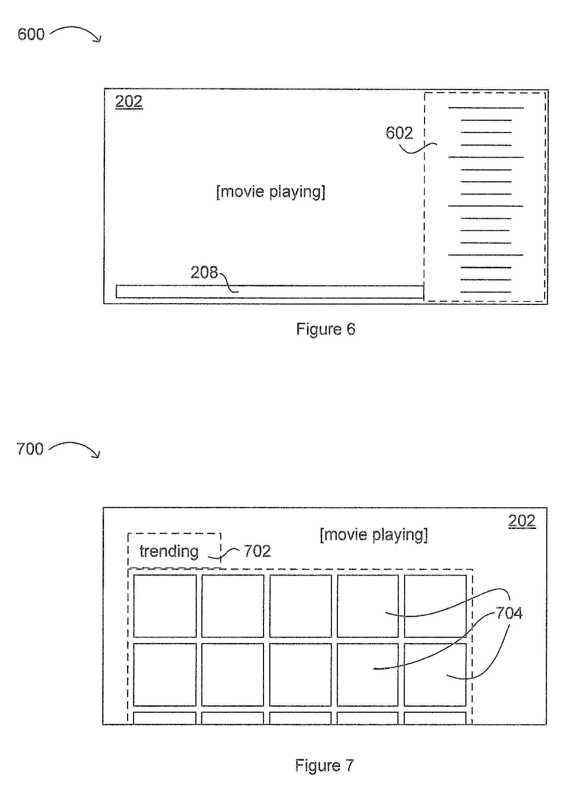

Figure 6 depicts an example UI with related content overlay (600). Personal relevancy data can include related content overlay 602. For example, related content overlay can include more detailed options, such as a Twitter feed, or other social network information. The social network information may be a direct feed from a social network, and/or an output from recommendation engine 112. Further, items in related content overlay 602 can link to locations for additional viewing of related content (e.g., a grid view, a detail view, a web browser, external applications, etc.).

When related content overlay 602 is displayed, the footer can be minimized, and is shown here as compact footer 208. However, the footer may be reduced in size from related content footer 402, but may be somewhat larger than compact footer 208. For example, a user may select an icon (e.g., indicating a Twitter feed) in related content footer 402. In response to the icon selection from the related content footer, related content overlay 602 (e.g., with the Twitter feed) can be displayed in the foreground as an overlay, and the related content footer can be minimized. A user may also return focus to the footer by selecting an indicated button.

Figure 7 depicts an example UI with a grid view of content collections (700). Label 702 can indicate the type of personal relevancy data, and also may represent a selection made (e.g., from navigation menu 302). Objects 704 can be presented in a grid view, and may represent content collections, such as popular or cast-specific media content, or other personal relevancy data. The grid view may be used to display content collections that have been accessed from menu view 300. Currently playing content can be displayed as an inset, or in the background, of display screen 202.

Personal relevancy data may be determined by using a recommendation engine, by accessing social network information, and/or by accessing activity logs for the user. Particular embodiments may utilize a variety of approaches for determining personal relevancy data. For example, television content relevance may include observations on a user's viewing habits, while relevant web content may be determined by what is popular in a user's social circle. In order to observe a user's viewing habits, electronic program guide (EPG) data can be accessed, and/or meta data from a connected cable or other set-top box (STB) can be used to determine content that is currently playing on that STB.

Consumption patterns may be considered in determining personal relevancy data. For example, if a user watches an episodic television show regularly, such a show may be considered as relevant to that user in the future. Explicit preference may also be considered in determining personal relevancy data. For example, if a user bookmarks a web site, records a television show, or purchases an application, that content may be considered as relevant to the user.

A hardware state may also be considered in determining personal relevancy data. For example, if a user inserts a Blu-ray disc or connects a PS3, content that is related to the disc or game system can be considered as relevant. Social relevance may also be considered in determining personal relevancy data. For example, if a user's Facebook friends link to a particular URL that the present user has not yet visited, then that URL may be considered as relevant to the present user. Collaborative filtering may also be considered in determining personal relevancy data. For example, content that is popular within a user's demographic may also be considered as relevant to the user.

In one embodiment, a method of controlling a user interface can include: displaying a plurality of objects on a display screen, where each of the plurality of objects represents media content; accepting, by a computing device, a signal indicating user selection of an object from the plurality of objects; determining personal relevancy data associated with the selected object, where the personal relevancy data is determined by using a recommendation engine and at least in part by accessing content from a social network; playing the media content represented by the selected object, where the media content is displayed in a background on the display screen; and displaying the personal relevancy data in a foreground on the display screen.

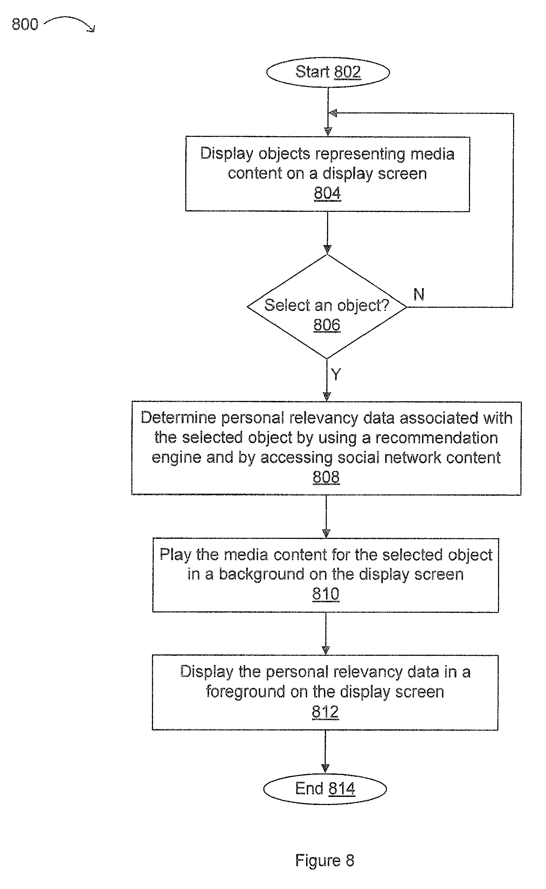

Figure 8 is a flow diagram 800 of an example method of controlling a UI. The flow can begin at 802, and at 804 objects representing media content can be displayed on a display screen. If one of the objects is selected (e.g., by using a highlight-driven interface) at 806, personal relevancy information can be determined at 808. The personal relevancy data can be associated with the selected object, and may be determined by using a recommendation engine, and by accessing social network content.

At 810, media content for the selected object can be played in a background on the display screen. At 812, the personal relevancy data can be displayed in a foreground on the display screen, completing the flow at 814. As discussed above, the personal relevancy data can be related to the media content for the selected object that is playing in the background. The personal relevancy data can also include data related to the user, including social network information for the user. The personal relevancy data can also include data for multiple users when multiple users are detected as interacting with computing device 102.

While various steps in the example flow diagram 800 are shown in a certain order, particular embodiments are amenable to different orderings. For example, media content being played in response to the selected object can occur simultaneously, before, or after, determining personal relevancy data for the selected object. Also, the personal relevancy data can be displayed in the foreground on the display screen simultaneously, before, or after playing the media content for the selected object in the background of the display screen. As discussed above, menu controls can also be included so as to turn the personal relevancy on or off, or to select menu items for expanded related content information.

Although the description has been described with respect to particular embodiments thereof, these particular embodiments are merely illustrative, and not restrictive. While certain UI icons, menu selections, and object arrangements have been shown herein, other suitable UI structures can also be utilized in particular embodiments. For example, other arrangements of objects on the display screen, and also organization of the various menus can also be accommodated. Further, any suitable types of UI object and menu item selection can also be accommodated. In addition, any type of media content and display format such that personal relevancy data can be displayed in a foreground, where media content is being accessed in a background of a display screen, can also be accommodated in particular embodiments.

Any suitable programming language can be used to implement the routines of particular embodiments including C, C++, Java, assembly language, etc. Different programming techniques can be employed such as procedural or object oriented. The routines can execute on a single processing device or multiple processors. Although the steps, operations, or computations may be presented in a specific order, this order may be changed in different particular embodiments. In some particular embodiments, multiple steps shown as sequential in this specification can be performed at the same time.

Particular embodiments may be implemented in a computer-readable storage medium for use by or in connection with the instruction execution system, apparatus, system, or device. Particular embodiments can be implemented in the form of control logic in software or hardware or a combination of both. The control logic, when executed by one or more processors, may be operable to perform that which is described in particular embodiments.

Particular embodiments may be implemented by using a programmed general purpose digital computer, by using application specific integrated circuits, programmable logic devices, field programmable gate arrays, optical, chemical, biological, quantum or nanoengineered systems, components and mechanisms may be used. In general, the functions of particular embodiments can be achieved by any means as is known in the art. Distributed, networked systems, components, and/or circuits can be used. Communication, or transfer, of data may be wired, wireless, or by any other means.

It will also be appreciated that one or more of the elements depicted in the drawings/figures can also be implemented in a more separated or integrated manner, or even removed or rendered as inoperable in certain cases, as is useful in accordance with a particular application. It is also within the spirit and scope to implement a program or code that can be stored in a machine-readable medium to permit a computer to perform any of the methods described above.

A "processor" incudes any suitable hardware and/or software system, mechanism or component that processes data, signals or other information. A processor can include a system with a general-purpose central processing unit, multiple processing units, dedicated circuitry for achieving functionality, or other systems. Processing need not be limited to a geographic location, or have temporal limitations. For example, a processor can perform its functions in "real time," "offline," in a "batch mode," etc. Portions of processing can be performed at different times and at different locations, by different (or the same) processing systems. A computer may be any processor in communication with a memory. The memory may be any suitable processor-readable storage medium, such as random-access memory (RAM), read-only memory (ROM), magnetic or optical disk, or other tangible media suitable for storing instructions for execution by the processor.

As used in the description herein and throughout the claims that follow, "a", "an", and "the" includes plural references unless the context clearly dictates otherwise. Also, as used in the description herein and throughout the claims that follow, the meaning of "in" incudes "in" and "on" unless the context clearly dictates otherwise.

Thus, while particular embodiments have been described herein, latitudes of modification, various changes, and substitutions are intended in the foregoing disclosures, and it will be appreciated that in some instances some features of particular embodiments will be employed without a corresponding use of other features without departing from the scope of the present invention as defined in the appended claims. Therefore, many modifications may be made to adapt a particular situation or material to the essential scope.

Various further aspects and features of the present invention are defined in the appended claims.

Various further example implementations of the present technique are defined in the following numbered clauses:
1. A method of controlling a user interface, the method comprising:
   displaying a plurality of objects on a display screen, wherein each of the plurality of objects represents media content;
   accepting, by a computing device, a signal indicating user selection of an object from the plurality of objects;
   determining personal relevancy data associated with the selected object, wherein the personal relevancy data is determined by using a recommendation engine and at least in part by accessing content from a social network;
   playing the media content represented by the selected object, wherein the media content is displayed in a background on the display screen; and
   displaying the personal relevancy data in a foreground on the display screen.
2. The method of clause 1, wherein the displaying the personal relevancy data comprises displaying a navigation menu in the foreground of the display screen.
3. The method of clause 2, wherein the navigation menu is displayed as an overlay on top of the plurality of objects.
4. The method of clause 1, wherein the displaying the personal relevancy data comprises displaying textual information.
5. The method of clause 1, wherein the accepting the signal indicating the user selection comprises deriving the signal from a gesture input of the user.
6. The method of clause 1, wherein the accepting the signal indicating the user selection comprising deriving the signal from voice recognition of the user.
7. An apparatus, comprising:
   one or more processors; and
   logic encoded in one or more tangible media for execution by the one or more processors, and when executed being operable to perform:
      displaying a plurality of objects on a display screen, wherein each of the plurality of objects represents media content;
      accepting a signal indicating user selection of an object from the plurality of objects;
      determining personal relevancy data associated with the selected object, wherein the personal relevancy data is determined by using a recommendation engine and at least in part by accessing content from a social network;
      playing the media content represented by the selected object, wherein the media content is displayed in a background on the display screen; and
      displaying the personal relevancy data in a foreground on the display screen.
8. The apparatus of clause 7, wherein the displaying the personal relevancy data comprises displaying a navigation menu in the foreground of the display screen.
9. The apparatus of clause 7, wherein the displaying the personal relevancy data comprises displaying textual information.
10. The apparatus of clause 7, wherein the accepting the signal indicating the user selection comprises deriving the signal from a gesture input of the user.
11. The apparatus of clause 7, wherein the accepting the signal indicating the user selection comprising deriving the signal from voice recognition of the user.
12. A system for controlling a user interface, the system comprising:
   means for displaying a plurality of objects on a display screen, wherein each of the plurality of objects represents media content;
   means for accepting, by a computing device, a signal indicating user selection of an object from the plurality of objects;
   means for determining personal relevancy data associated with the selected object, wherein the personal relevancy data is determined by using a recommendation engine and at least in part by accessing content from a social network;
   means for playing the media content represented by the selected object, wherein the media content is displayed in a background on the display screen; and
   means for displaying the personal relevancy data in a foreground on the display screen.

## Claims

1. A method of controlling a user interface, the method comprising:
displaying a plurality of objects on a display screen, wherein each of the plurality of objects represents media content;
accepting, by a computing device, a signal indicating user selection of an object from the plurality of objects;
determining personal relevancy data associated with the selected object, wherein the personal relevancy data is determined by using a recommendation engine and at least in part by accessing content from a social network;
playing the media content represented by the selected object, wherein the media content is displayed in a background on the display screen; and
displaying the personal relevancy data in a foreground on the display screen.

2. The method of claim 1, wherein the determining the personal relevancy data further comprises using an activity log of the user.

3. The method of claim 1, wherein the determining the personal relevancy data further comprises filtering content from the social network by using the recommendation engine.

4. The method of claim 1, wherein the displaying the personal relevancy data comprises displaying one or both of a navigation menu in the foreground of the display screen, or textual information.

5. The method of claim 4, wherein the navigation menu is displayed as an overlay on top of the plurality of objects.

6. The method of claim 5, further comprising:
accepting, by the computing device, a signal indicating user selection of an item in the navigation menu; and
displaying content associated with the selected item.

7. The method of claim 1, wherein the plurality of objects are navigable using a highlight-driven interface.

8. The method of claim 1, further comprising:
accepting, by the computing device, a signal indicating user selection of an entry screen; and
displaying the entry screen on the display screen, wherein the entry screen comprises the plurality of objects and a compact footer.

9. The method of claim 1, wherein the accepting the signal indicating the user selection comprises deriving the signal from one or both of a gesture input of the user, or voice recognition of the user.

10. An apparatus, comprising:
one or more processors; and
logic encoded in one or more tangible media for execution by the one or more processors, and when executed being operable to perform:
displaying a plurality of objects on a display screen, wherein each of the plurality of objects represents media content;
accepting a signal indicating user selection of an object from the plurality of objects;
determining personal relevancy data associated with the selected object, wherein the personal relevancy data is determined by using a recommendation engine and at least in part by accessing content from a social network;
playing the media content represented by the selected object, wherein the media content is displayed in a background on the display screen; and
displaying the personal relevancy data in a foreground on the display screen.

11. The apparatus of claim 10, wherein the determining the personal relevancy data further comprises using an activity log of the user.

12. The apparatus of claim 10, wherein the determining the personal relevancy data further comprises filtering content from the social network by using the recommendation engine.

13. The apparatus of claim 10, wherein the displaying the personal relevancy data comprises displaying one or both of a navigation menu in the foreground of the display screen, or textual information.

14. The apparatus of claim 10, wherein the logic when executed is further operable to perform:
accepting, by the computing device, a signal indicating user selection of an entry screen; and
displaying the entry screen on the display screen, wherein the entry screen comprises the plurality of objects and a compact footer.

15. The apparatus of claim 12, wherein the accepting the signal indicating the user selection comprises deriving the signal from one or both of a gesture input of the user, or voice recognition of the user.
